# EUROPÄISCHE PATENTSCHRIFT

(11) **EP 1 456 268 B1**
(45) Veröffentlichungstag und Bekanntmachung des Hinweises auf die Patenterteilung: **25.06.2014**
(21) Anmeldenummer: 02792949.6
(22) Anmeldetag: 10.12.2002
(51) Int. Cl.: C08G 18/36, C08G 18/10

(54) **SCHWERBRENNBARE POLYURETHANKLEBSTOFFE**
HIGHLY FLAME-RESISTANT POLYURETHANE ADHESIVES
COLLES POLYURETHANNE DIFFICILEMENT INFLAMMABLES

(30) Priorität: 18.12.2001 DE 10162344
(43) Veröffentlichungstag der Anmeldung: 15.09.2004
(73) Patentinhaber: Henkel AG & Co. KGaA, 40589 Düsseldorf (DE)
(72) Erfinder: THIELE, Lothar, 40764 Langenfeld (DE); POEL, Andre, Te, 47877 Willich (DE); GARMANN, Helga, 51381 Leverkusen (DE); GORZNY, Marion, 40229 Düsseldorf (DE); SANCH, François, 51000 Chalons en Campagne (FR)
(86) Internationale Anmeldenummer: PCT/EP2002/013987
(87) Internationale Veröffentlichungsnummer: WO 2003/051954

(56) Entgegenhaltungen:
- DE-A- 4 114 022
- US-A- 4 340 682
- US-A- 4 742 087
- DATABASE WPI Week 9203 Derwent Publications Ltd., London, GB; AN 1992-020310 XP002237759 "Adhesive composition for laminated ,fire resistant,inorganic boards" & JP 03 269077 A (MITSUBISHI ), 29. November 1991 (1991-11-29)
- PATENT ABSTRACTS OF JAPAN vol. 1999, no. 05, 31. Mai 1999 (1999-05-31) & JP 11 049947 A (HITACHI CHEM CO LTD), 23. Februar 1999 (1999-02-23)
- PATENT ABSTRACTS OF JAPAN vol. 006, no. 169 (C-122), 2. September 1982 (1982-09-02) & JP 57 083518 A (MITSUBISHI CHEM IND LTD), 25. Mai 1982 (1982-05-25)

## Beschreibung

Die vorliegende Erfindung betrifft reaktive Polyurethanklebstoffe, die schwer brennbar sind sowie deren Verwendung zur Herstellung von Bauelementen.

In der Bauindustrie spielt aktiver Brandschutz eine immer bedeutendere Rolle. Viele Innenausbauteile in der Bauindustrie, aber auch Bauelemente für den Innenausbau von Schiffen bestehen aus Sandwichelementen, deren Kern aus Mineralwolle aufgebaut ist und die Metalldeckschichten aufweisen.

Zur Herstellung von derartigen Sandwichelementen aus Mineralwolle und Metalldeckschichten sind schäumende Klebstoffe wegen guter Klebefestigkeiten infolge der Verfestigung der Mineralwolle durch den entstehenden Schaum und dessen Penetration in die Mineralwolle die bevorzugten Produkte. Das Aufschäumen des Polyurethanklebstoffes kann mit Isocyanat und Wasser oder mit Isocyanat und Carbonsäuren realisiert werden.

Werden hohe Anforderungen bezüglich Brandschutz und niedriger Rauchentwicklung im Brandfall an die Paneele gestellt, dann sind Polyurethansysteme mit Füllstoffen wegen ihres niedrigen kalorischen Wertes vorteilhaft. Diese Produkte haben hohe Viskositäten und lassen sich deshalb nicht oder nur bedingt versprühen. Der Sprühauftrag der Klebstoffe muß möglich sein, da die Herstellung der Brandschutzpaneelen in der Regel nach dem DBL-Verfahren (Doppelband Lamination) erfolgt.

Flammgeschützte Hartschaumstoffe auf Isocyanatbasis, insbesondere Polyurethan- und Polyisocyanurathartschäume, sind seit langem bekannt und werden vorwiegend im Bauwesen zu Dämmzwecken eingesetzt. Halogenfreie Formulierungen für flammgeschützte Hartschaumstoffe auf Isocyanatbasis sind aus DE-A-4003718, DE-A-4109076, DE-A-4222519 und EP-B-0463493 bekannt. Diese Formulierungen enthalten als Flammschutzmittel Phosphorsäureester, wie z.B. Diphenylkresylphosphat und Triethylposphat, oder Phosphonsäureester, wie z.B. Diethylethylphosphonat und Dimethylmethylphosphonat, in größeren Mengen. Diese Flammschutzmittel wirken sich negativ auf die mechanischen Festigkeiten und das Alterungsverhalten aus. Halogenfreie Formulierungen flammgeschützter Hartschaumstoffe auf Isocyanatbasis sind weiterhin in DE-A-4020283 beschrieben, wobei roter Phosphor als Flammschutzmittel verwendet wird. Roter Phosphor neigt zur Entzündung, insbesondere beim Auftreten von Reibungswärme an mechanisch bewegten Teilen, wie sie z.B. an Polyurethan- oder Sandwich-Verarbeitungsanlagen vorkommt. Daher bestehen sicherheitstechnische Bedenken gegen die Verwendung von rotem Phosphor. Derartige Zusätze von Flammenschutzmitteln sind nicht auf niederviskose reaktive Polyurethanklebstoffe anwendbar, die im Sprühauftrag angewendet werden. Auch eine Zugabe von Verdünnern oder anderen viskositätsreduzierenden Zusatzstoffen führt nicht zu brauchbaren Klebstoffen.

Die EP-A-719807 offenbart ein Verfahren zur Herstellung von flammgeschützten Hartschaumstoffen auf Isocyanatbasis, insbesondere Polyurethan- und Polyisocyanurathartschäumen, durch Umsetzung von organischen und/oder modifizierten organischen Polyisocyanaten mit mindestens einer höhermolekularen Verbindung mit mindestens zwei reaktiven Wasserstoffatomen und gegebenenfalls niedermolekularen Kettenverlängerungs- und/oder Vernetzungsmitteln in Gegenwart von Treibmitteln, Katalysatoren, Flammschutzmitteln sowie gegebenenfalls weiteren Hilfsmitteln und/oder Zusatzstoffen, wobei als Flammschutzmittel eine Kombination aus mindestens einem flüssigen, gegenüber Isocyanaten reaktiven Flammschutzmittel und aus mindestens einem festen Flammschutzmittel eingesetzt wird. Der Schrift ist nicht zu entnehmen, daß eine derartige Vorgehensweise auch zur Herstellung von schwer brennbaren und wenig Rauch entwickelnden Klebstoffen zur Sandwichherstellung geeignet ist.

Die EP-A-913415 lehrt, daß der Zusatz von Kohlenhydratkomponenten wie Stärke oder Zucker in feinvermahlener Form den Langzeitflammschutz von Polyurethanhartschaurnstoffen verbessert. Auch dieser Schrift ist nicht zu entnehmen, daß derartige Maßnahmen für die Herstellung von Klebstoffen geeignet ist, die sich zur Herstellung von Sandwichelementen eignen.

Die EP-A-376415 schlägt zur Reduzierung der Rauchentwicklung von Polyurethanklebstoffen vor, daß in die Polyolkomponente ein hoher Anteil von Wasser, mindestens 5 Gew. % bezogen auf die Gesamtmenge des Klebstoffes, eingesetzt werden soll. Dieser Klebstoff kann jedoch nur in Belagsgewichten unterhalb 150 g/m² eingesetzt werden, um eine ausreichend niedrige Rauchentwicklung und ein geringes Brandverhalten zu bewirken und die DIN 4102, Klasse A2 zu erfüllen. Derartig niedrige Auftragsmengen von Klebstoffen sind zwar für nichtporöse Substrate denkbar, sie sind jedoch nicht geeignet, poröse Materialien wie Mineralwolle mit anderen Substraten dauerhaft fest zu verkleben.

Die DE 41 14 022 A1 beschreibt lösungsmittelfreie reaktive Zweikomponenten-Polyurethan-Klebstoffe zur Herstellung von Sandwichelementen, die auf einer Polyolkomponente, enthaltend Rizinusöle, die partiell dehydratisiert sein können, Polypropylenglykol und einem hohen Füllstoffgehalt an Kreide (Calciumcarbonat), sowie einer Polyisocyanat-Komponente basieren. Es werden keine Klebstoffe offenbart, die Aluminiumhydroxid oder Aluminiumoxidhydrat enthalten.

Angesichts dieses Standes der Technik haben sich die Erfinder die Aufgabe gestellt, schäumende Klebstoffe mit guten Klebefestigkeiten bereitzustellen, die zur Verklebung und Verfestigung von Mineralwolle mit Metaildeckschichten geeignet sind, wobei das verklebte Sandwichelement die A2 - Klassifizierung nach EN 13501 - 1 und / oder DIN 4102 Teil 1 erfüllen soll.

Die erfindungsgemäße Lösung der Aufgabe ist den Patentansprüchen zu entnehmen, sie besteht im Wesentlichen in der Bereitstellung einer reaktiven 2-Komponenten-Palyurethanklebstaff-Zusammensetzung auf der Basis von Polyolen, Polyisocyanaten und Füllstoffen, dadurch gekennzeichnet, dass der spezifische Brennwert gemäß EN ISO 1716 ≤ 20 MJ/kg, vorzugsweise ≤ 15 MJ/kg ist, sowie als Hauptkomponente des Polyols Rizinusöl oder Umesterungsprodukte von Mischungen aus Rizinusöl mit OH-Gruppen-freien Triglyceriden verwendet werden, und Aluminiumhydroxid oder Aluminiumoxidhydrat der überwiegende Bestandteil der Füllstoffe ist.

Ein weiterer Gegenstand der vorliegenden Erfindung ist die Verwendung der vorgenannten Klebstoff-Zusammensetzungen zum Verkleben von Sandwich-Bauelementen, insbesondere zur Verklebung von Mineralwölle-Formkörpern mit Metalldeckschichten.

Der erfindungsgemäße Polyurethan-Klebstoff ist vorzugsweise ein zweikomponentiger, aufschäumender Klebstoff, bei dem die Komponente A ein oder mehrere Polyole, flammhemmende Füllstoffe, ggf. Weichmacher sowie hochsiedende Lösungsmittel, geringe Menge an Wasser und / oder Carbonsäure(n) und / oder Netzmittel enthält.

Prinzipiell können als Polyole sämtliche in der Polyurethanchemie bekannten di- oder trifunktionellen Polyole eingesetzt werden wie z.B. Polyethylenglycole, Polypropylenglycole, Polytetraethylenglycole, Polybutylenglycole und / oder deren Copolymeren sowie Polyesterpolyole auf der Basis von aliphatischen oder aromatischen Dicarbonsäuren und niedermolekularen Diolen oder Triolen, weiterhin können auch hydroxyfunktionelle Polycaprolactone mitverwendet werden. Die vorgenannten bekannten di- oder trifunktionellen Polyole oder deren Mischungen haben Molekulargewichte (MW) zwischen 300 und 5000, vorzugsweise zwischen 400 und 2000. Es können auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden (siehe z.B. DE-A-3626223). Weitere geeignete Polyole sind die als Dimerdiole oder -triole bekannten Veresterungsprodukte aus Dimerfettsäure und niedermolekularen Diolen und / oder Triolen (Fa. Cognis )

Erfindungsgemäß wird als Hauptkomponente des Polyols Rizinusöl verwendet, dadurch wird die Rauchentwicklung drastisch reduziert. An Stelle des aus natürliche Quellen stammenden Rizinusöls können auch die in der DE-A-19947563 offenbarten Umesterungsprodukte von Mischungen aus Rizinusöl und nativen, im Wesentlichen OH-gruppenfreien Triglyceriden wie Rapsöl, Sonnenblumenöl, Öl der Neuen Sonnenblume, Sojaöl oder deren Mischungen mitverwendet werden. Die Lehre der DE-A-19947563 im Bezug auf die Polyurethanbindemittel-Komponenten ist ausdrücklich Bestandteil der vorliegenden Anmeldung.

Die Komponente B enthält dabei in der Regel nur ein Polyisocyanat, das eine Isocyanat-Funktionalität von 2,0 bis 3,0, vorzugsweise von 2,0 bis 2,7 aufweist. Als Härterkomponente B kann prinzipiell jedes aromatische, cycloaliphatische oder aliphatische Polyisocyanat verwendet werden.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-düsocyanat (NDI), Naphthalin-1,4-diisocyanat (NDI), Diphenylmethan-4,4-diisocyanat (MDI), Diphenylmethan-2,4-diisocyanat sowie Mischungen des 4,4'-Diphenytmethandiisocyanats mit dem 2,4'-Isomeren oder deren Mischungen mit höherfunktionellen Oligomeren (sogenanntes Roh-MDI), Xylylen-düsocyanat (XDI), 4,4'-Diphenyl-dimethylmethandüsocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDI auch HMDI), 1-Isocyanatomethyl-3-isocyanato-1,5,5-trimethyl-cyclohexan (Isophoron-diisocyanat, IPDI), Cyclohexan-1,4-diisocyanat, hydriertes Xylylendiisocyanat (H₆XDI), 1-Methyl-2,4-düsocyanato-cyclohexan, 1,4-Diisocyanato-2,2,6-trimethylcyclohexan (TMCDI), m- oder p-Tetramethylxylendüsocyanat (m-TMXDI, p-TMXDI) und Dimerfettsäure-Diisocyanat. Beispiele für aliphatische Polyisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan sowie 1,12-Dodecandiisocyanat (C₁₂DI). Ganz besonders bevorzug sind - insbesondere auch aus Kostengründen - die homologen Mischungen des rohen 4,4'-Diphenylmethandiisocyanats.

Zur Erzielung eines niedrigen spezifischen Brennwertes gemäß EN ISO 1716 von kleinerlgleich 20 MJ/kg ist es wichtig, daß die Füllstoffe sorgfältig ausgewählt werden. Bevorzugte Füllstoffe sind Kaolin, Calciumoxid/ Calciumcarbonat, Magnesiumcarbonat, Calciummagnesiumcarbonat, basische Magnesiumcarbonate, Zinkborat, Antimonoxid, Ammoniumphosphat, Aluminiumhydroxid, Aluminiumoxidhydrat oder deren Mischungen, wobei Aluminiumhydroxid oder Aluminiumoxidhydrat als überwiegender Bestandteil der Füllstoffkombination zu verwenden sind. Eine weitere Verbesserung sowohl in Bezug auf flammenhemmende Wirkung, niedrigen spezifischen Brennwert als auch in Bezug auf eine geringe Rauchgasentwicklung wird durch den Zusatz von halogenierten organischen Verbindungen und / oder organischen Phosphorverbindungen bewirkt.

Die halogenierten organischen Verbindungen können dabei ausgewählt werden aus Chlorparaffinen, Hexabrombenzol, bromierten Diphenylethern, Dibromneopentylglycol (als isocyanatreaktive flammenhemmende Komponente) oder PVC-Pulver, oder Mischungen der vorgenannten halogenierten organischen Verbindungen.

Die organischen Phosphorverbindungen können ausgewählt werden, aus Triarylphosphaten, insbesondere Triphenylphosphat, Trikresylphosphat, Alkylarylphosphaten, Alkylphosphiten, Arylphosphiten, Alkylarylphosphiten, den entsprechenden Phosphonaten oder Mischungen der vorgenannten Phosphorverbindungen. Konkrete Beispiele sind Tris(isopropyliertesphenyl)-phosphat, Trixylylphosphat, Tritoluylphosphat, 2-Ethylhexyldiphenylphosphat, Decyldiphenylphasphat, Tris-(2-chl orethyl)phosphat, Tris(2-chlarprapyl)-phosphat, Tris(-2,3-dibrompropyl)-phosphat, Tetrakis-(2-chlor)ethylendiphosphat, Dimethyl-methylphosphonat, Diethylethylphosphonat oder deren Mischungen.

Außer den genannten (halogensubstituierten) Phosphaten können auch weitere (an)organische Flammschutzmittel, wie z.B. Arsenoxid, Blähgraphit, Calciumsulfat, Cyanursäurederivate, wie z.B. Melamin, gecoateter roter Phosphor, und als Synergisten Metallsalze auf Basis von Molybdaten, Boraten, Stannaten oder Mischungen aus mindestens zwei Flammschutzmitteln, wie z.B. Ammoniumpolyphosphate und Melamin und/oder Blähgraphit eingesetzt werden.

Zur Viskositätserniedrigung können die erfindungsgemäßen Klebstoff-Zusammensetzungen noch hochsiedende Lösungsmittel, insbesondere niedere Alkylester von C4- bis C8-Dicarbonsäuren, enthalten. Besonders bevorzugt sind dabei Mischungen von Dicarbonsäuremethylestern.

Im Allgemeinem hat es sich als zweckmäßig erwiesen, 5 bis 50 Gew.-Teile, vorzugsweise 10 bis 25 Gew.-Teile, der genannten Flammschutzmittel oder -mischungen für jeweils 100 Gew.-Teile der Komponente A zu verwenden.

Es war eingangs ausgeführt, daß eine bevorzugte Ausführungsform dieser Klebstoffe nach der Applikation aufschäumen soll, in diesem Fall enthält die Komponente A (die Polyolkomponente) geringe Mengen Wasser und /oder Carbonsäure(n), in der Größenordnung 0,1 bis 1 Gew. % vorzugsweise bis 0,5 Gew. % Wasser oder Carbonsäure(n) bezogen auf die Komponente A.

Weiterhin können übliche Rheologiehilfsmittel wie insbesondere hochdisperse Kieselsäuren mitverwendet werden, sowie weitere übliche Hilfs- und Zusatzmittel in untergeordneter Menge wie Netz- und Dispergiermittel, Pigmente, Alterungsschutzmittel und übliche Polyurethankatalysatoren.

Es war bereits vorstehend darauf hingewiesen worden, daß in einer bevorzugten Ausführungsform die erfindungsgemäßen Klebstoffe als zweikomponentige Klebstoffe formuliert werden, wobei die Komponente A die Polyole, die flammhemmenden Füllstoffe, sowie die weiteren Flammschutzmittel und Rauchfänger sowie Wasser und /oder Carbonsäure(n), Rheologiehilfsmittel, Netzmittel und weitere Hilfs- und Zusatzstoffe enthält und die Komponente B in der Regel ausschließlich das Polyisocyanat, vorzugsweise Roh-MDI enthält. Das Mischungsverhältnis der Komponenten A zu B ist 100: 20 ± 5 (Gewichtsverhältnis).

Die Erfindung soll nun an Hand der nachfolgenden Ausführungsbeispiele näher erläutert werden, wobei die Auswahl der Beispiele keine Beschränkung des Umfanges des Erfindungsgegenstandes darstellt. Sofern nicht anders angegeben, sind an alle Mengenangaben in den nachfolgenden Beispielen Gewichtsprozent bzw. Gewichtsteile bezogen auf die gesamte Zusammensetzung der polyolhaltigen Komponente A.

### Beispiele

Die nachfolgenden Klebstoffformulierungen wurden hergestellt in dem die A-Komponenten (polyolhaltige Komponenten) homogenisiert wurden. Anschließend wurden Polyol - Härtermischungen in den angegebenen Mischungsverhältnissen hergestellt und ausgehärtet. Danach wurde der spezifische Brennwert gemäß EN ISO 1716 ermittelt.

### Beispiel 1 (Vergleich):

| | |
|---|---|
| Difunktionelles Polypropylenglycol MW 1000 | 9,2 % |
| Trifunktionelles Polypropylenglycol MW 750 | 6,1 % |
| Trifunktionelles Polypropylenglycol MW 450 | 8,0 % |
| Dispergiermittel (Byk W 968) | 1,0 % |
| Mischung von Dicarbonsäuremethylestern | 3.0 % |
| Wasser | 0.4 % |
| Aerosil 150 | 0,3 % |
| Kreide | 72,0 % |

Härter: Roh-MDI,
Mischungsverhältnis (Harz : Härter) = 100 : 20 (Gewicht)

### Beispiel 2 (erfindungsgemäß):

| | |
|---|---|
| Rizinusöl | 15,3 % |
| Trifunktionelles Polypropylenglycol MW 450 | 8,0 % |
| Dispergiermittel (BYK W 968) | 1,0% |
| Mischung von Dicarbonsäuremethylestern | 3,0 % |
| Wasser | 0,4 % |
| Aerosil 150 | 0,3 % |
| Aluminiumhydroxid | 72,0 % |

Härter: Roh-MDI,
Mischungsverhältnis (Harz : Härter) = 100 : 20 (Gewicht)

### Beispiel 3 (erfindungsgemäß)

| | |
|---|---|
| Rizinusöl | 10,3 % |
| Trifunktionelles Polypropylenglycol MW 450 | 8,0 % |
| Dispergiermittel (Byk W 968) | 1,0 % |
| Mischung von Dicarbonsäuremethylestern | 3.0 % |
| Diethoxyethylphosphinoxid | 5,0 % |
| Wasser | 0,4 % |
| Aerosil 150 | 0,3 % |
| Zinkborat | 4,0 % |
| Aluminiumhydroxid | 68,0 % |

Härter: Roh-MDI,
Mischungsverhältnis (Harz: Härter) = 100 : 25 (Gewicht)

Für das Beispiel 1 wurde ein Wert von 20 MJ/kg ermittelt, damit sind Auftragsmengen des Klebstoffes bis zu 200 g/m² möglich um die Forderung der EN 13501-1 für nicht substantielle Panelbestandteile (Sandwich-Bestandteile), wie den Klebstoff, bei nicht homogenen Bauteilen zu erreichen. Diese Norm erfordert nämlich einen spezifischen Brennwert der nichtsubstantiellen Bestandteile, wie der Klebstoffe, von kleiner als 4 MJ/m². Die mit diesem Klebstoff hergestellten Sandwich-Verklebungen haben wegen der geringen Klebstoffmengen jedoch relativ geringe Festigkeiten und außerdem im SBI-Test ("Single Burning Item - Test", gemäß EN 13823) eine so starke Rauchentwicklung, daß diese Prüfung nicht bestanden wird. Der SBI-Test inklusive Rauchentwicklung ist neben dem spezifischen Brennwert das zweite Kriterium, das ein Klebstoff nach EN 13501-1 erfüllen muß. Durch den Ersatz eines Teils der Polypropylenglycole durch Rizinusöl kann überraschenderweise die Rauchentwicklung stark reduziert werden und durch den Einsatz von Aluminiumhydroxid anstelle von Calciumcarbonat wird der spezifische Brennwert drastisch reduziert. Der Klebstoff gemäß erfindungsgemäßem Beispiel 2 hat einen spezifischen Brennwert von 12 MJ/kg. Dadurch kann der Klebstoff mit einer maximalen Auftragsmenge von 333 g/m² eingesetzt werden, so daß derartig hergestellt Sandwich-Verklebungen höhere Festigkeiten aufweisen. Außerdem erfüllen Sandwichverklebungen aus Mineralwolleplatten und metallischen Außenschichten die Anforderungen der EN 13501 - 1 für die A2-Klassifizierung.

Die DIN 4102-1, die vielfach für Brandschutzklassifizierungen noch beachtet wird, stellt bezüglich Rauchentwicklung unter Flammenbeanspruchung bzw. unter Verschwelungsbedingungen sowie im Brandschachttest noch strengere Anforderungen, die der Klebstoff gemäß Beispiel 2 noch nicht erfüllt.

Der erfindungsgemäße Klebstoff 3 weist den gleichen spezifischen Brennwert wie der Klebstoff gemäß Beispiel 2 auf, wegen der zusätzlichen Flammschutzmittel erfüllt dieser Klebstoff alle Anforderungen die notwendig sind, damit Sandwichverklebungen der vorgenannten Art auch die DIN 4102-1 erfüllen. Weiterhin wird der Brandschachttest mit diesen Verklebungen ebenfalls erfüllt.

## Patentansprüche

1. Reaktive 2-Komponenten-Polyurethanklebstoff-Zusammensetzung auf der Basis von Polyolen, Polyisocyanaten und Füllstoffen, **dadurch gekennzeichnet, dass**
der spezifische Brennwert gemäß EN ISO 1716 ≤ 20 MJ/kg, vorzugsweise ≤ 15 MJ/kg ist,
sowie als Hauptkomponente des Polyols Rizinusöl oder Umesterungsprodukte von Mischungen aus Rizinusöl mit OH-Gruppen-freien Triglyceriden verwendet werden,
und Aluminiumhydroxid oder Aluminiumoxidhydrat der überwiegende Bestandteil der Füllstoffe ist.

2. Reaktive Polyurethanklebstoff-Zusammensetzung nach Anspruch 1, bestehend aus einer
Komponente A, die
ein oder mehrere Polyole, flammhemmende Füllstoffe, ggf. Weichmacher, hochsiedende Lösungsmittel, ggf. Wasser und / oder Carbonsäure(n) und / oder Netzmittel oder deren Mischungen enthält
und einer Komponente B
enthaltend ein Polyisocyanat mit einer Isocyanatfunktionalität von 2,0 bis 3.0, vorzugsweise von 2,0 bis 2,7.

3. Reaktive Polyurethahklebstoff-Zusammensetzung nach Anspruch 2 **dadurch gekennzeichnet, daß** die flammenhemmenden Füllstoffe auswählt werden aus Kaolin, Calciumoxid, Calciumcarbonat, Magnesiumcarbonat, Calciummagnesiumcarbonat, basischen Magnesiumcarbonaten, Zinkborat, Antimonoxid, Aluminiumhydroxid, Aluminiumoxidhydrat, Ammoniumpolyphosphat oder deren Mischung, ggf. in Kombination mit halogenierten organischen Verbindungen und/oder organischen Phosphorverbindungen.

4. Reaktive Polyurethanklebstoff-Zusammensetzung nach Anspruch 3, **dadurch gekennzeichnet, daß** die halogenierten organischen Verbindungen ausgewählt werden aus Chlorparaffinen, Hexabrombenzol, bromierte Diphenylester, Dibromneopentylglycol, PVC oder deren Mischungen.

5. Reaktive Polyurethanklebstoff-Zusammensetzung nach Anspruch 3, **dadurch gekennzeichnet, daß** die organischen Phosphorverbindungen ausgewählt werden aus Triarylphosphaten, Alkylarylphosphaten, Trialkylphosphaten, Aryl-, Alkyaryl-, Alkyl-Phosphiten oder -Phosphonaten oder deren Mischungen, ggf, in Kombination mit den halogenierten Verbindungen gemäß Anspruch 4.

6. Verwendung der Klebstoffe nach mindestens einem der vorhergehenden Ansprüche 1 bis 5 zum Verkleben von Sandwich-Bauteitetementen.

7. Sandwich-Bauelement hergestellt mit einer 2-Komponenten-Polyurethan klebstoff-Zusammensetzung nach einem der Ansprüche 1 bis 5 **dadurch gekennzeichnet, daß** sein Brandverhalten der Klasse A2 nach EN 13501-1 und / oder DIN 4102 Teil 1 entspricht.

## Claims

1. A reactive two-component polyurethane adhesive composition based on polyols, polyisocyanates, and fillers, **characterized in that**
the specific heat of combustion value in accordance with EN ISO 1716 is ≤ 20 MJ/kg, preferably ≤ 15 MJ/kg,
and castor oil, or transesterification products of mixtures of castor oil with OH-group-free triglycerides, are used as a principal component of the polyol,
and aluminium hydroxide or aluminium oxide hydrate is the predominant constituent of the fillers.

2. The reactive polyurethane adhesive composition according to Claim 1, made up of
a component A that
contains one or more polyols, flame-retardant fillers, optionally plasticizers, high-boiling solvents, optionally water and/or carboxylic acid(s) and/or wetting agents, or mixtures thereof,
and a component B
containing a polyisocyanate having an isocyanate functionality from 2.0 to 3.0, preferably from 2.0 to 2.7.

3. The reactive polyurethane adhesive composition according to Claim 2, **characterized in that** the flame-retardant fillers are selected from kaolin, calcium oxide, calcium carbonate, magnesium carbonate, calcium magnesium carbonate, basic magnesium carbonates, zinc borate, antimony oxide, aluminium hydroxide, aluminium oxide hydrate, ammonium polyphosphate, or a mixture thereof, optionally in combination with halogenated organic compounds and/or organic phosphorus compounds.

4. The reactive polyurethane adhesive composition according to Claim 3, **characterized in that** the halogenated organic compounds are selected from chloroparaffins, hexabromobenzene, brominated diphenyl esters, dibromoneopentyl glycol, PVC, or mixtures thereof.

5. The reactive polyurethane adhesive composition according to Claim 3, **characterized in that** the organic phosphorus compounds are selected from triaryl phosphates, alkylaryl phosphates, trialkyl phosphates, aryl, alkylaryl, alkyl phosphites or phosphonates, or mixtures thereof, optionally in combination with the halogenated compounds in accordance with Claim 4.

6. Use of the adhesives according to at least one of the preceding Claims 1 to 5 for adhesive bonding of sandwich component elements.

7. A sandwich component produced using a two-component polyurethane adhesive composition according to one of Claims 1 to 5, **characterized in that** its fire behaviour corresponds to class A2 according to EN 13501-1 and/or DIN 4102 Part 1.

## Revendications

1. Composition réactive d'un adhésif de polyuréthane à 2 composants à base de polyols, de polyisocyanates et de matières de charge, **caractérisée en ce que** la valeur calorifique maximale selon la norme EN ISO 1716 est ≤ 20 MJ/kg, de préférence ≤ 15 MJ/kg, et on utilise à titre de composant principal du polyol, de l'huile de ricin ou des produits de transestérification de mélanges d'huile de ricin avec des triglycérides exempts de groupes OH, et l'hydroxyde d'aluminium ou l'oxydhydrate d'aluminium représente le constituant principal des matières de charge.

2. Composition réactive d'un adhésif de polyuréthane selon la revendication 1, constituée par un composant A qui contient un ou plusieurs polyols, des matières de charge ignifuges, de manière facultative, des plastifiants, des solvants à point d'ébullition élevé, de manière facultative de l'eau et/ou un ou plusieurs acides carboxyliques et/ou des agents mouillants, ou leurs mélanges, et par un composant B contenant un polyisocyanate possédant une fonctionnalité isocyanate de 2,0 à 3,0, de préférence de 2,0 à 2,7.

3. Composition réactive d'un adhésif de polyuréthane selon la revendication 2, **caractérisée en ce que** les matières de charge ignifuges sont choisies parmi le kaolin, l'oxyde de calcium, le carbonate de calcium, le carbonate de magnésium, le carbonate de calcium-magnésium, des carbonates de magnésium basiques, le borate de zinc, l'oxyde d'antimoine, l'hydroxyde d'aluminium, l'oxydhydrate d'aluminium, le polyphosphate d'ammonium, ou leurs mélanges, de manière facultative en combinaison avec des composés organiques halogénés et/ou des composés organophosphorés.

4. Composition réactive d'un adhésif de polyuréthane selon la revendication 3, **caractérisée en ce que** les composés organiques halogénés sont choisis parmi des chloroparaffines, l'hexabromoberizène, des esters diphényliques bromés, le dibromonéopentylglycol, le PVC, ou leurs mélanges.

5. Composition réactive d'un adhésif de polyuréthanne selon la revendication 3, **caractérisée en ce que** les composés organophosphorés sont choisis parmi des phosphates de triaryle, des phosphates d'alkylaryle, des phosphates de trialkyle, des phosphites ou des phosphonates d'aryle, d'alkylaryle, d'alkyle, ou leurs mélanges, de manière facultative en combinaison avec les composés halogénés selon la revendication 4.

6. Utilisation des adhésifs selon au moins une des revendications précédentes 1 à 5, pour le collage d'éléments de construction en sandwich.

7. Élément de construction en sandwich que l'on obtient avec une composition d'un adhésif de polyuréthane à 2 composants selon l'une quelconque des revendications 1 à 5, **caractérisé en ce que** son comportement au feu correspond à la classe A2 selon les normes EN 13501-1 et/ou DIN 4102, partie 1.
